(19) **Europäisches Patentamt / European Patent Office / Office européen des brevets**

(11) **EP 2 127 061 B1**

(12) **FASCICULE DE BREVET EUROPEEN**

(45) Date de publication et mention de la délivrance du brevet:
**30.05.2012 Bulletin 2012/22**

(21) Numéro de dépôt: **07872371.5**

(22) Date de dépôt: **14.12.2007**

(51) Int Cl.:
*H02J 3/01* *(2006.01)*      *H02M 1/12* *(2006.01)*

(86) Numéro de dépôt international:
**PCT/FR2007/002081**

(87) Numéro de publication internationale:
**WO 2008/090283 (31.07.2008 Gazette 2008/31)**

(54) **FILTRAGE ACTIF D'UN COURANT TRIPHASE**

AKTIVE DREHSTROM-FILTERUNG

ACTIVE FILTRATION OF A THREE-PHASE CURRENT

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **26.12.2006 FR 0655949**

(43) Date de publication de la demande:
**02.12.2009 Bulletin 2009/49**

(73) Titulaire: **Université De Poitiers**
**86034 Poitiers Cedex (FR)**

(72) Inventeurs:
• **RAMBAULT, Laurent**
  **F-86180 Buxerolles (FR)**
• **DEWEZ, Claude**
  **F-86440 Migne Auxances (FR)**
• **GAUBERT, Jean-Paul**
  **F-86000 Poitiers (FR)**

(74) Mandataire: **Novagraaf Technologies**
**122, rue Edouard Vaillant**
**92593 Levallois-Perret Cedex (FR)**

(56) Documents cités:
**EP-A- 0 666 632      WO-A-94/05067**
**JP-A- 5 211 722      US-A1- 2002 136 036**

**Description**

L'invention concerne un procédé de filtrage actif à mettre en oeuvre au niveau d'un onduleur, ledit procédé visant à réduire les harmoniques qui polluent un réseau électrique. Il s'agit de réduire considérablement la taille des condensateurs du bus continu alimentant l'onduleur.

Plus particulièrement, l'invention concerne la dépollution d'un réseau électrique triphasé pour lequel le courant n'est pas une onde sinusoïdale à 50 Hz.

On assiste actuellement à la prolifération d'appareils utilisant des convertisseurs statiques en entrée, qui absorbent un courant non sinusoïdal, autrement dit qui absorbent un courant pollué d'harmoniques.

Pour atténuer les harmoniques, on utilise généralement des condensateurs et des onduleurs, les condensateurs étant placés en amont des onduleurs et les onduleurs en amont des appareils électriques.

Les condensateurs sont ceux de bus de courant continu qui ont pour fonction de maintenir la tension constante en entrée de l'onduleur, et d'atténuer les harmoniques du courant entrant dans l'onduleur.

L'onduleur a pour rôle de réguler le courant d'un réseau électrique en appliquant à l'onduleur des algorithmes de contrôle.

Si le courant entrant dans l'onduleur est pollué d'harmoniques, l'onduleur les traite de la même manière, de sorte que l'onduleur réinjecte sur les réseaux électriques des courants harmoniques.

On trouve ainsi sur le réseau électrique triphasé des harmoniques pollueuses de courant à 250 Hz (harmonique 5), à 350 Hz (harmonique 7), à 550 (harmonique 11), à 650 (harmonique 13) etc.

La présente invention vise à réduire la taille des condensateurs des bus continus se trouvant en amont des onduleurs, en mettant en oeuvre au niveau de l'onduleur un procédé qui assure que le courant traité par l'onduleur ne comporte plus aucune harmonique.

Classiquement, pour extraire un rang d'harmonique particulier (par exemple, l'harmonique de rang 5) on applique un algorithme faisant appel à la transformée de Park, afin de générer une consigne à fournir à l'onduleur.

Plus particulièrement, on procède à une mesure du courant pour déterminer les harmoniques polluantes. On fournit alors à l'onduleur une consigne sur les harmoniques à supprimer. L'onduleur réinjecte un courant correspondant à chacune des harmoniques mais en opposition de phase, de manière à les supprimer. On élimine ainsi une à une les harmoniques polluantes.

Ce procédé nécessite toutefois que la tension du bus continu soit parfaitement régulée pour ne pas polluer les réseaux avec des harmoniques supplémentaires : en effet, une variation de la tension du bus peut générer une ou plusieurs harmoniques polluantes.

Le document de brevet américain US-5 731 965 décrit un système combinant les effets d'un filtre actif et d'un filtre passif. Le filtre actif injecte une harmonique polluante en opposition de phase dans le courant polluant de sorte à atténuer la pollution. Quand au filtre passif, il a pour objectif d'isoler certaines harmoniques, et en particulier les harmoniques 5 et 7.

Le système décrit dans ce document présente l'inconvénient de ne pas enlever véritablement toutes les harmoniques polluantes et d'isoler parfaitement la composante à 50 Hz, car il ne tient pas compte des éventuelles variations de tension du bus.

Le document de brevet américain US 2002136036 concerne un procédé de filtrage actif d'un courant triphasé d'un réseau électrique, ledit courant comportant une composante fondamentale à une fréquence choisie et au moins une composante polluante à une fréquence différente de ladite fréquence choisie, ledit procédé comportant :

- une étape de mesure du courant circulant sur le réseau en un point du réseau,
- une étape de génération d'un courant proportionnel à ladite composante polluante et en opposition de phase, par un onduleur,
- et une étape de réinjection dudit courant proportionnel sur ledit réseau électrique, de manière à annuler ladite composante polluante,

dans lequel l'étape de génération du courant proportionnel comporte les sous-étapes suivantes:

   o transmettre la mesure du courant circulant sur le réseau à un dispositif d'extraction de ladite composante fondamentale,

   o modéliser la composante fondamentale du courant circulant sur le réseau à partir d'une modélisation propre audit dispositif d'extraction,

   o calculer ladite composante fondamentale à partir de ladite modélisation,

o soustraire la composante fondamentale audit courant mesuré, de sorte à obtenir le courant total polluant,

o générer une commande au courant total polluant,

o et transmettre ladite commande audit onduleur, de sorte que ledit onduleur génère ledit courant proportionnel au courant total polluant.

A l'origine de l'invention, la demanderesse a souhaité mettre au point un procédé visant à tenir compte de toutes les harmoniques polluantes, et non uniquement celles que l'on choisit de fournir comme consigne à donner à l'onduleur. Le procédé selon selon la revendication 1 a également pour objet de tenir compte des éventuelles fluctuations de tensions du bus continu, de sorte que les harmoniques générées par ces fluctuations soient également supprimées par le procédé.

La présente invention se démarque de l'art antérieur en ce qu'elle ne repose pas sur la génération d'une consigne à donner à l'onduleur.

Ainsi mis en oeuvre, le procédé élimine tout courant polluant car la totalité du courant polluant est théoriquement prise en compte par l'onduleur, puisque la commande ne correspond pas à une somme d'harmoniques polluantes considérées une à une mais à la soustraction de la composante fondamentale qui est calculée à partir d'un modèle au courant total mesuré.

De même, grâce au calcul de la composante fondamentale, permettant de calculer la composante polluante totale, le procédé permet également de prendre en compte les harmoniques qui sont engendrées par les fluctuations de tension en amont de l'onduleur.

Autrement dit, les fluctuations de la tension du bus continu génèrent des harmoniques qui sont traitées par l'invention au même titre que celles issues du réseau électrique. Ainsi, en termes de pollution harmonique, la fluctuation de la tension du bus continu ne génère pas de pollution supplémentaire.

Puisque que le caractère continu de la tension n'est plus un élément gênant, la taille des condensateurs des bus continus placés généralement en amont des onduleurs et des appareils électriques peut être diminuée.

Dans le cadre de la revendication 1, on prévoit que la modélisation est linéaire et est déterminée sur la base du modèle suivant :

$$\begin{bmatrix} \dot{X}_d \\ \dot{X}_q \end{bmatrix} = \begin{bmatrix} A & 2\pi f h I_n \\ -2\pi f h I_n & A \end{bmatrix}\begin{bmatrix} X_d \\ X_q \end{bmatrix} + \begin{pmatrix} B_u & \phi \\ \phi & B_u \end{pmatrix}\begin{bmatrix} U_{inv_d} \\ U_{inv_q} \end{bmatrix} + \begin{pmatrix} B_w & \phi \\ \phi & B_w \end{pmatrix}\begin{bmatrix} w_d \\ w_q \end{bmatrix}$$

$$\begin{bmatrix} s_d \\ s_q \end{bmatrix} = \begin{pmatrix} C & \phi \\ \phi & C \end{pmatrix}\begin{bmatrix} X_d \\ X_q \end{bmatrix} + \begin{pmatrix} D_u & \phi \\ \phi & D_u \end{pmatrix}\begin{bmatrix} U_{inv_d} \\ U_{inv_q} \end{bmatrix} + \begin{pmatrix} D_w & \phi \\ \phi & D_w \end{pmatrix}\begin{bmatrix} w_d \\ w_q \end{bmatrix}$$

où :

- h représente le rang de l'harmonique correspondant à la composante dont la fréquence est choisie, pour h=1 il s'agit de la composante fondamentale,
- $X_d$ est un vecteur qui contient les composantes [$i_{net}$ $i_{inv}$ $v_{Caf}$] selon l'axe d,'et lorsque cette grandeur possède un point au-dessus, il s'agit de sa dérivée par rapport au temps,
- $X_q$ est un vecteur qui contient les composantes [$i_{net}$ $i_{inv}$ $v_{Caf}$] selon l'axe q, et lorsque cette grandeur possède un point au-dessus, il s'agit de sa dérivée par rapport au temps,

- A est la matrice $\begin{bmatrix} -\dfrac{r_{net}}{L_{net}} & 0 & -\dfrac{1}{L_{net}} \\ 0 & 0 & -\dfrac{1}{L_{af}} \\ \dfrac{1}{C_{af}} & \dfrac{1}{C_{af}} & 0 \end{bmatrix}$ dont les paramètres sont ceux du réseau et du filtre de sortie de l'onduleur,

- f est la fréquence choisie

- In est une matrice identité de même dimension que A c'est-à-dire que $In = \begin{bmatrix} 0 & 1 & 0 \\ 0 & 0 & 1 \end{bmatrix}$

- Φ est une matrice de dimension convenable qui ne possède que des termes nuls,

- Bu est une matrice définie par : $B_u = \begin{bmatrix} 0 \\ 1 \\ \dfrac{1}{L_{af}} \\ 0 \end{bmatrix}$

- Bw est une matrice définie par : $B_w = \begin{bmatrix} 0 & \dfrac{1}{L_{net}} \\ 0 & 0 \\ \dfrac{1}{C_{af}} & 0 \end{bmatrix}$

- $Uinv_d$ est la tension de commande de l'onduleur selon un axe d,
- $Uinv_q$ est la tension de commande de l'onduleur selon l'axe q,
- $W_d$ est un vecteur qui contient les composantes $[i_{load} \; V_{net}]$ selon l'axe d,
- $W_q$ est un vecteur qui contient les composantes $[i_{load} \; V_{net}]$ selon l'axe q,
- $s_d = X_d$ et $S_q = X_q$

- C est une matrice qui s'écrit : $C = \begin{bmatrix} 1 & 0 & 0 \\ 0 & 1 & 0 \\ 0 & 0 & 1 \end{bmatrix}$

- $D_u = \begin{bmatrix} 0 \\ 0 \\ 0 \end{bmatrix}$

- $i_{load}$ est l'intensité de la charge,
- $V_{net}$ est la tension du réseau,
- $L_{af}$ est l'inductance d'un filtre de conversion en sortie de l'onduleur,
- $C_{af}$ est la capacité d'un filtre de conversion en sortie de l'onduleur,
- $L_{net}$ est l'inductance du réseau,
- $r_{net}$ est la résistance du réseau,

et $D_w = \begin{bmatrix} 0 & 0 \\ 0 & 0 \\ 0 & 0 \end{bmatrix}$

Cette modélisation permet de modéliser le courant mesuré : les données inconnues dans la modélisation sont définies en fonction du courant mesuré sur le réseau.

Dans le cadre d'un mode de réalisation, on peut prévoir que le calcul de ladite composante fondamentale consiste à remplacer la fréquence du courant dudit paramètre par ladite fréquence choisie de ladite composante fondamentale.

Pour assurer une dépollution du réseau à intervalles de temps réguliers, on peut prévoir que les étapes du procédé selon l'invention soient réalisées en boucle. Ainsi, la composante polluante est annulée régulièrement sur le réseau.

Un mode de réalisation vise également une application de filtrage actif avec une modélisation linéaire à un courant mesuré en un point d'un réseau, ledit courant mesuré comportant une composante fondamentale à une fréquence choisie et au moins une composante polluante à une fréquence différente de ladite fréquence choisie, ladite application de ladite modélisation étant mise en oeuvre par un système d'extraction de ladite composante fondamentale, de manière à modéliser ladite composante fondamentale.

Selon ce mode de réalisation, l'application se caractérise par le fait que la modélisation est déterminée sur la base du modèle suivant :

$$\begin{bmatrix} \dot{X}_d \\ \dot{X}_q \end{bmatrix} = \begin{bmatrix} A & 2\pi fh I_n \\ -2\pi fh I_n & A \end{bmatrix}\begin{bmatrix} X_d \\ X_q \end{bmatrix} + \begin{pmatrix} B_u & \phi \\ \phi & B_u \end{pmatrix}\begin{bmatrix} U_{inv_d} \\ U_{inv_q} \end{bmatrix} + \begin{pmatrix} B_w & \phi \\ \phi & B_w \end{pmatrix}\begin{bmatrix} w_d \\ w_q \end{bmatrix}$$

$$\begin{bmatrix} s_d \\ s_q \end{bmatrix} = \begin{pmatrix} C & \phi \\ \phi & C \end{pmatrix}\begin{bmatrix} X_d \\ X_q \end{bmatrix} + \begin{pmatrix} D_u & \phi \\ \phi & D_u \end{pmatrix}\begin{bmatrix} U_{inv_d} \\ U_{inv_q} \end{bmatrix} + \begin{pmatrix} D_w & \phi \\ \phi & D_w \end{pmatrix}\begin{bmatrix} w_d \\ w_q \end{bmatrix}$$

où les paramètres ont été définis précédemment.

La revendication 5 vise en outre un système de filtrage actif d'un courant triphasé d'un réseau électrique, ledit courant comportant une composante fondamentale à une fréquence choisie et au moins une composante polluante à une fréquence différente de ladite fréquence choisie, ledit système comportant :

- des moyens pour mesurer le courant circulant sur le réseau en un point du réseau,

- un onduleur apte à générer un courant proportionnel à ladite composante polluante et en opposition de phase, et à réinjecter ledit courant proportionnel sur ledit réseau électrique, de manière à annuler ladite composante polluante.

Selon l'invention, le système comporte un dispositif d'extraction de ladite composante fondamentale, apte à :

o modéliser le courant circulant sur le réseau à partir d'une modélisation qui lui est propre,

o calculer ladite composante fondamentale à partir de ladite modélisation,

o soustraire la composante fondamentale audit courant mesuré, de sorte à obtenir le courant total polluant,

o générer une commande correspondante au courant total polluant,

o et transmettre ladite commande audit onduleur, de sorte que ledit onduleur génère ledit courant proportionnel au courant total polluant,

dans lequel la modélisation est linéaire et est determinée sur la base du modèle qui est utilisé dans le procédé.

On décrira maintenant un mode de réalisation préférée du procédé selon l'invention en faisant référence aux dessins annexés parmi lesquels :

- la figure 1 est un schéma qui illustre les principaux moyens techniques concernés par le procédé selon l'invention et leurs relations,

- la figure 2 montre de manière plus détaillé les éléments des principaux moyens techniques de la figure 1,

- la figure 3 illustre schématiquement une boucle de régulation mise en oeuvre conformément à un mode de réalisation du procédé selon l'invention,

- et la figure 4 représente de manière schématique l'extraction des harmoniques polluantes sur un réseau triphasé.

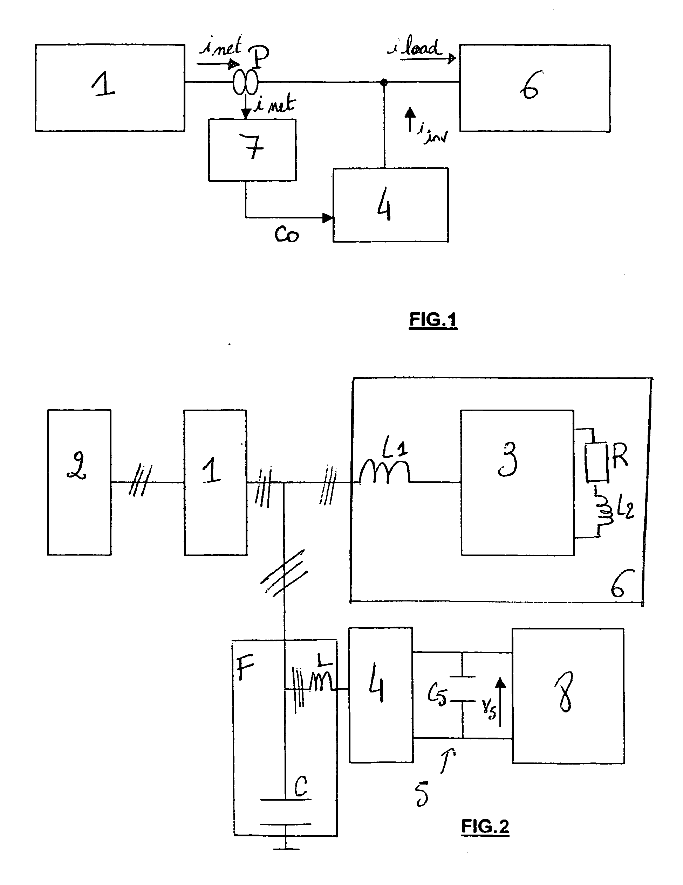

Dans un premier temps, il sera fait plus particulièrement référence aux figures 1 et 2 pour décrire le principe de mise en oeuvre du procédé selon l'invention.

La figure 1 montre un réseau 1 de distribution triphasé de courant $i_{net}$ à un ensemble de poste 6, cet ensemble de postes de 6 constituant ce qui est couramment nommé la charge polluante.

Illustrée en figure 2, la charge polluante 6 comprend de manière en soi classique un transformateur moyenne tension / basse tension 2 ainsi qu'un pont redresseur 3 relié à des inductances L1 et L2 et à une résistance R.

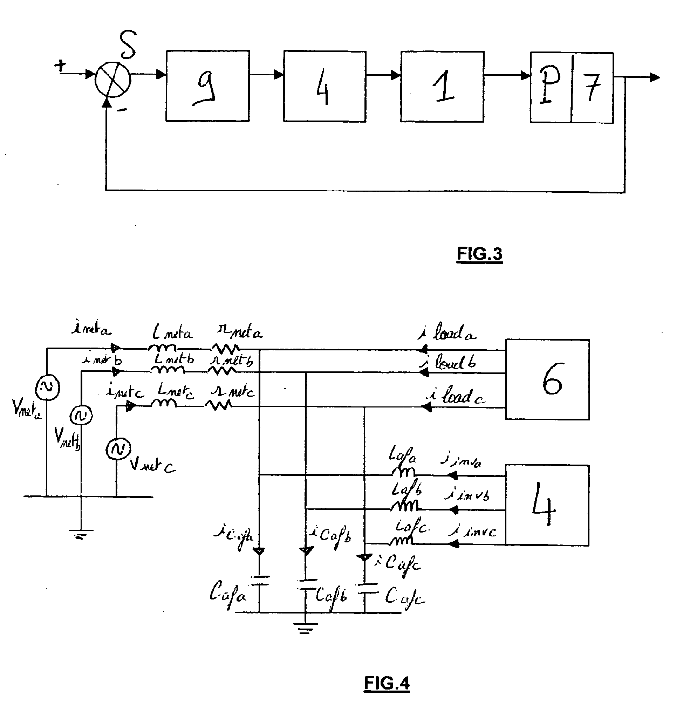

Les triples traits représentés sur la figure 3 illustre les trois phases d'un réseau électrique triphasé.

De manière générale, le courant $i_{net}$ circulant sur le réseau triphasé comprend une composante de courant dite « fondamentale », c'est-à-dire la composante la plus importante et la plus utile pour faire fonctionner tous les postes constituant la charge polluante 6. L'autre partie du courant $i_{net}$ est composée uniquement de composantes, c'est-à-dire d'harmoniques que l'on souhaite retirer car elles polluent le réseau.

Sur la figure 1, sont également représentés un onduleur 4 dont la fonction est d'atténuer les harmoniques polluantes en injectant sur le réseau un courrant $i_{inv}$ correspondant à une ou plusieurs harmoniques polluantes en opposition de phase, de sorte qu'un courant $i_{load}$ absorbé par la charge polluante, chargé d' harmoniques polluantes, ne circule pas en d'autres points du réseau électrique.

Le courant $i_{net}$ est mesuré en un point du réseau, ce point portant la référence P sur la figure 1.

Conformément au procédé selon l'invention, le système comporte un dispositif d'extraction 7 de la composante fondamentale du courant mesuré $i_{net}$.

Comme le montre la figure 1, le dispositif d'extraction 7 est disposé en amont de l'onduleur 4.

Concrètement, le dispositif d'extraction 7 est un système informatique comportant une structure micro programmée, comportant une carte d'acquisition et un processeur.

Le dispositif d'extraction 7 comprend un algorithme permettant une modélisation à partir du courant mesuré $i_{net}$.

Cet algorithme est le suivant :

$$\begin{bmatrix} \dot{X}_d \\ \dot{X}_q \end{bmatrix} = \begin{bmatrix} A & 2\pi f h I_n \\ -2\pi f h I_n & A \end{bmatrix} \begin{bmatrix} X_d \\ X_q \end{bmatrix} + \begin{pmatrix} B_u & \phi \\ \phi & B_u \end{pmatrix} \begin{bmatrix} U_{inv_d} \\ U_{inv_q} \end{bmatrix} + \begin{pmatrix} B_w & \phi \\ \phi & B_w \end{pmatrix} \begin{bmatrix} w_d \\ w_q \end{bmatrix}$$

$$\begin{bmatrix} s_d \\ s_q \end{bmatrix} = \begin{pmatrix} C & \phi \\ \phi & C \end{pmatrix} \begin{bmatrix} X_d \\ X_q \end{bmatrix} + \begin{pmatrix} D_u & \phi \\ \phi & D_u \end{pmatrix} \begin{bmatrix} U_{inv_d} \\ U_{inv_q} \end{bmatrix} + \begin{pmatrix} D_w & \phi \\ \phi & D_w \end{pmatrix} \begin{bmatrix} w_d \\ w_q \end{bmatrix}$$

où

- h représente le rang de l'harmonique correspondant à la composante dont la fréquence est choisie, pour h=1 il s'agit de la composante fondamentale,

- Xd est un vecteur qui contient les composantes [$i_{net}$ $i_{inv}$ $v_{Caf}$] selon l'axe d, et lorsque cette grandeur possède un point au-dessus, il s'agit de sa dérivée par rapport au temps,

- Xq est un vecteur qui contient les composantes [$i_{net}$ $i_{inv}$ $v_{Caf}$] selon l'axe q, et lorsque cette grandeur possède un point au-dessus, il s'agit de sa dérivée par rapport au temps,

- A est la matrice $\begin{bmatrix} -\dfrac{r_{net}}{L_{net}} & 0 & -\dfrac{1}{L_{net}} \\ 0 & 0 & -\dfrac{1}{L_{af}} \\ \dfrac{1}{C_{af}} & \dfrac{1}{C_{af}} & 0 \end{bmatrix}$ dont les paramètres sont ceux du réseau et d'un filtre de sortie de l'onduleur,

- f est la fréquence choisie

- In est une matrice identité de même dimension que A c'est-à-dire que $In = \begin{bmatrix} 1 & 0 & 0 \\ 0 & 1 & 0 \\ 0 & 0 & 1 \end{bmatrix}$

- Φ est une matrice de dimension convenable qui ne possède que des termes nuls,

- Bu est une matrice définie par : $B_u = \begin{bmatrix} 0 \\ \dfrac{1}{L_{af}} \\ 0 \end{bmatrix}$

- Bw est une matrice définie par : $B_w = \begin{vmatrix} 0 & 0 \\ \dfrac{1}{C_{af}} & 0 \end{vmatrix}$

- Uinv$_d$ est la tension de commande de l'onduleur selon un axe d,
- Uinv$_q$ est la tension de commande de l'onduleur selon l'axe q,
- W$_d$ est un vecteur qui contient les composantes [i$_{load}$ V$_{net}$] selon l'axe d,
- W$_q$ est un vecteur qui contient les composantes [i$_{load}$ V$_{net}$] selon l'axe q,
- S$_d$=X$_d$ et S$_q$=X$_q$

- C est une matrice qui s'écrit : $C = \begin{bmatrix} 1 & 0 & 0 \\ 0 & 1 & 0 \\ 0 & 0 & 1 \end{bmatrix}$

- $D_u = \begin{bmatrix} 0 \\ 0 \\ 0 \end{bmatrix}$

- i$_{load}$ est l'intensité absorbée par la charge,
- V$_{net}$ est la tension du réseau,
- L$_{af}$ est l'inductance d'un filtre de conversion en sortie de l'onduleur,
- C$_{af}$ est la capacité d'un filtre de conversion en sortie de l'onduleur,
- L$_{net}$ est l'inductance du réseau,
- r$_{net}$ est la résistance du réseau,

et $D_w = \begin{bmatrix} 0 & 0 \\ 0 & 0 \\ 0 & 0 \end{bmatrix}$.

A partir de ce modèle, le dispositif d'extraction 7 modélise le courant i$_{net}$ circulant sur le réseau.

La composante fondamentale du courant est mesurée en remplacer la fréquence du courant dudit paramètre par ladite fréquence choisie de ladite composante fondamentale.

Dans le cadre de ce mode de réalisation, la composante fondamentale est la composant du courant dont la fréquence est 50 Hz.

Ainsi, en remplaçant f par 50 Hz et h par 1 et à partir de la mesure de courant i$_{net}$, le dispositif d'extraction modélise la composante fondamentale du courant mesuré.

Le dispositif d'extraction comprend un soustracteur S (figure 4) qui soustrait la composante fondamentale ainsi modélisée au courant mesuré i$_{net}$, de sorte à obtenir le courant total polluant, ce dernier constituant ladite composante polluante précédemment évoquée.

À partir des résultats du calcul du courant total polluant, le dispositif de contrôle 7 génère une commande Co correspondante, qu'il transmet audit onduleur 4 (figure 1).

De manière en soi classique, l'onduleur 4 génère un courant inverse en fonction de la commande, qui correspond au courant total polluant mais en opposition de phase.

Réellement, l'onduleur 4 ne réinjecte pas directement le courant inverse dans le réseau, mais une tension qui est convertie en courant par un filtre F représenté de manière symbolique par une capacité C et une inductance L sur la figure 2.

Sur la figure 2, on observe un ensemble 8 représentant schématiquement le réseau et le dispositif d'extraction 7, appelé également redresseur.

Entre le dispositif d'extraction 7 et l'onduleur 4, on place un bus continu 5 dont la fonction est de maintenir une tension stable à l'entrée de l'onduleur.

Pour ce faire, le bus continu 5 comporte de manière en soi classique une capacité C$_5$ (V$_5$ représente la tension à ces bornes).

De manière à assurer une dépollution du réseau, on prévoit d'appliquer en boucle le procédé sur le réseau.

La figure 3 illustre une boucle de régulation mettant en oeuvre le procédé selon l'invention :

Une mesure P du courant sur le réseau est réalisée et est transmise au dispositif d'extraction 7 de manière à modéliser la composante fondamentale du courant mesuré.

La composante fondamentale étant modélisée, elle est transmise à un soustracteur S qui va extraire la composante fondamentale du courant mesuré de manière à n'obtenir que la composante polluante.

À partir de cette composante polluante, un régulateur 9 agit sur l'onduleur 4 en lui transmettant une commande Co correspondante à la composante totale polluante du courant.

L'onduleur 4 injecte sur le réseau 1 un courant $i_{inv}$ correspondant à la composante totale polluante du courant mesuré, mais en opposition de phase, de sorte à éliminer la composante polluante du courant sur le réseau.

Une mesure de courant va de nouveau être effectuée sur le réseau, et ainsi de suite...

La figure 4 illustre de manière schématique les courants provenant du réseau 1, de la charge 6 et de l'onduleur.

Le réseau peut être défini par une tension $V_{net}$, une intensité de courant $i_{net}$, une inductance $L_{net}$ et une résistance $r_{net}$.

On définit une intensité de charge $i_{load}$ correspondant à l'intensité de courant transmise à différents postes connectés au réseau.

L'intensité $h_{inv}$ est l'intensité réinjectée par l'onduleur 4 sur le réseau.

Enfin, le filtre F peut être défini par une intensité de conversion $i_{Caf}$, une capacité $C_{af}$ et une inductance $L_{af}$.

Les indices a, c et c correspondent respectivement à chacune des trois phases du réseau triphasé.

À partir de la représentation schématique de la figure 6, la demanderesse a établi les quatre équations suivantes :

$$i_{net_i} = i_{Caf_i} - i_{load_i} - i_{inv_i} \qquad (1)$$

$$U_{inv_i} = L_{af_i} \frac{di_{inv_i}}{dt} + v_{Caf_i} \qquad (2)$$

$$i_{Caf_i} = C_{af_i} \frac{dv_{Caf_i}}{dt} \qquad (3)$$

$$V_{net_i} = L_{net_i} \frac{di_{net_i}}{dt} + r_{net_i} i_{net_i} + v_{Caf_i} \qquad (4)$$

Ces équations peuvent être réécrites de manière plus compacte comme ci-après :

$$\begin{bmatrix} \dot{X}_a \\ \dot{X}_b \\ \dot{X}_c \end{bmatrix} = \begin{pmatrix} A & \phi & \phi \\ \phi & A & \phi \\ \phi & \phi & A \end{pmatrix} \begin{bmatrix} X_a \\ X_b \\ X_c \end{bmatrix} + \begin{pmatrix} B_u & \phi & \phi \\ \phi & B_u & \phi \\ \phi & \phi & B_u \end{pmatrix} \begin{bmatrix} U_{inv_a} \\ U_{inv_b} \\ U_{inv_c} \end{bmatrix} + \begin{pmatrix} B_w & \phi & \phi \\ \phi & B_w & \phi \\ \phi & \phi & B_w \end{pmatrix} \begin{bmatrix} w_a \\ w_b \\ w_c \end{bmatrix}$$

$$\begin{bmatrix} s_a \\ s_b \\ s_c \end{bmatrix} = \begin{pmatrix} C & \phi & \phi \\ \phi & C & \phi \\ \phi & \phi & C \end{pmatrix} \begin{bmatrix} X_a \\ X_b \\ X_c \end{bmatrix} \qquad\qquad\qquad (5)$$

Où $\phi$ est une matrice de dimension appropriée,
*i = a, b ou c*

$$X_i = \begin{bmatrix} i_{net_i} \\ i_{inv_i} \\ v_{Caf_i} \end{bmatrix}, \quad w_i = \begin{bmatrix} i_{load_i} \\ V_{net_i} \end{bmatrix}, \quad A = \begin{pmatrix} -\dfrac{r_{net}}{L_{net}} & 0 & -\dfrac{1}{L_{net}} \\ 0 & 0 & -\dfrac{1}{L_{af}} \\ \dfrac{1}{C_{af}} & \dfrac{1}{C_{af}} & 0 \end{pmatrix},$$

$$B_u = \begin{pmatrix} 0 \\ \dfrac{1}{L_{af}} \\ 0 \end{pmatrix}, \quad B_w = \begin{pmatrix} 0 & \dfrac{1}{L_{net}} \\ 0 & 0 \\ \dfrac{1}{C_{af}} & 0 \end{pmatrix}, \quad C = \begin{pmatrix} 1 & 0 & 0 \\ 0 & 1 & 0 \\ 0 & 0 & 1 \end{pmatrix}$$

Par application de la transformée de Park, on obtient le modèle utilisé dans la modélisation de la composante fondamentale par le dispositif d'extraction, le modèle étant défini ci avant.

Ainsi mis en oeuvre, le procédé permet de réduire la taille des bus continus puisqu'il n'est plus nécessaire de contrôler les fluctuations de tension en amont de l'onduleur grâce à l'injection de courant en opposition de phase sur le réseau comprenant le courant polluant résultant desdites fluctuations éventuelles.

## Revendications

1.  Procédé de filtrage actif d'un courant triphasé d'un réseau électrique, ledit courant comportant une composante fondamentale à une fréquence choisie et au moins une composante polluante à une fréquence différente de ladite fréquence choisie, ledit procédé comportant :

    - une étape de mesure du courant circulant sur le réseau en un point du réseau,
    - une étape de génération d'un courant proportionnel à ladite composante polluante et en opposition de phase, par un onduleur,
    - et une étape de réinjection dudit courant proportionnel sur ledit réseau électrique, de manière à annuler ladite composante polluante, dans lequel l'étape de génération dudit courant proportionnel comporte les sous-étapes suivantes:

    o transmettre la mesure du courant circulant sur le réseau à un dispositif d'extraction de ladite composante fondamentale,
    o modéliser la composante fondamentale du courant circulant sur le réseau à partir d'une modélisation propre audit dispositif d'extraction,
    o calculer ladite composante fondamentale à partir de ladite modélisation,
    o soustraire la composante fondamentale audit courant mesuré, de sorte à obtenir le courant total polluant,
    o générer une commande correspondante au courant total polluant,
    o et transmettre ladite commande audit onduleur, de sorte que ledit onduleur génère ledit courant proportionnel au courant total polluant,

    ledit procédé étant **caractérisé en ce que** la modélisation est linéaire et est déterminée sur la base du modèle suivant :

$$
\begin{bmatrix} \dot{X}_d \\ \dot{X}_q \end{bmatrix} = \begin{bmatrix} A & 2\pi f h I_n \\ -2\pi f h I_n & A \end{bmatrix} \begin{bmatrix} X_d \\ X_q \end{bmatrix} + \begin{pmatrix} B_u & \phi \\ \phi & B_u \end{pmatrix} \begin{bmatrix} U_{inv_d} \\ U_{inv_q} \end{bmatrix} + \begin{pmatrix} B_w & \phi \\ \phi & B_w \end{pmatrix} \begin{bmatrix} w_d \\ w_q \end{bmatrix}
$$

$$
\begin{bmatrix} s_d \\ s_q \end{bmatrix} = \begin{pmatrix} C & \phi \\ \phi & C \end{pmatrix} \begin{bmatrix} X_d \\ X_q \end{bmatrix} + \begin{pmatrix} D_u & \phi \\ \phi & D_u \end{pmatrix} \begin{bmatrix} U_{inv_d} \\ U_{inv_q} \end{bmatrix} + \begin{pmatrix} D_w & \phi \\ \phi & D_w \end{pmatrix} \begin{bmatrix} w_d \\ w_q \end{bmatrix}
$$

où

- h représente le rang de l'harmonique correspondant à la composante dont la fréquence est choisie, pour h=1 il s'agit de la composante fondamentale,
- Xd est un vecteur qui contient les composantes [$i_{net}$ $i_{inv}$ $v_{Caf}$] selon l'axe d, et lorsque cette grandeur possède un point au-dessus, il s'agit de sa dérivée par rapport au temps,
- Xq est un vecteur qui contient les composantes [$i_{net}$ $i_{inv}$ $v_{Caf}$] selon l'axe q, et lorsque cette grandeur possède un point au-dessus, il s'agit de sa dérivée par rapport au temps,

- A est la matrice $\begin{bmatrix} -\dfrac{r_{net}}{L_{net}} & 0 & -\dfrac{1}{L_{net}} \\ 0 & 0 & -\dfrac{1}{L_{af}} \\ \dfrac{1}{C_{af}} & \dfrac{1}{C_{af}} & 0 \end{bmatrix}$ dont les paramètres sont ceux du réseau et du filtre de sortie de l'onduleur,
- f est la fréquence choisie

- In est une matrice identité de même dimension que A c'est-à-dire que $In = \begin{bmatrix} 1 & 0 & 0 \\ 0 & 1 & 0 \\ 0 & 0 & 1 \end{bmatrix}$

- $\phi$ est une matrice de dimension convenable qui ne possède que des termes nuls,

- Bu est une matrice définie par : $B_u = \begin{bmatrix} 0 \\ \dfrac{1}{L_{af}} \\ 0 \end{bmatrix}$

- Bw est une matrice définie par : $B_w = \begin{bmatrix} 0 & \dfrac{1}{L_{net}} \\ 0 & 0 \\ \dfrac{1}{C_{af}} & 0 \end{bmatrix}$

- Uinv$_d$ est la tension de commande de l'onduleur selon un axe d,
- Uinv$_q$ est la tension de commande de l'onduleur selon l'axe q,
- W$_d$ est un vecteur qui contient les composantes [$i_{load}$ $V_{net}$] selon l'axe d,
- W$_q$ est un vecteur qui contient les composantes [$i_{load}$ $V_{net}$] selon l'axe q,
- S$_d$ = X$_d$ et S$_q$ = X$_q$

- C est une matrice qui s'écrit : $C = \begin{bmatrix} 0 & 1 & 0 \\ 0 & 0 & 1 \end{bmatrix}$

$$- D_u = \begin{bmatrix} 0 \\ 0 \\ 0 \end{bmatrix}$$

- $i_{load}$ est l'intensité de la charge,
- $V_{net}$ est la tension du réseau,
- $L_{af}$ est l'inductance d'un filtre de conversion en sortie de l'onduleur,
- $C_{af}$ est la capacité d'un filtre de conversion en sortie de l'onduleur,
- $L_{net}$ est l'inductance du réseau,
- $r_{net}$ est la résistance du réseau,

$$\text{et } D_w = \begin{bmatrix} 0 & 0 \\ 0 & 0 \\ 0 & 0 \end{bmatrix}$$

2. Procédé selon la revendication 1, **caractérisé en ce que** le calcul de ladite composante fondamentale consiste à remplacer la fréquence du courant dudit paramètre par ladite fréquence choisie de ladite composante fondamentale.

3. Procédé selon l'une quelconque des revendications précédentes, **caractérisé en ce que** lesdites étapes sont réalisées en boucle, de sorte à annuler régulièrement la composante polluante sur le réseau.

4. Application d'un procédé de filtrage actif d'un courant triphasé d'un réseau électrique selon l'une quelconque des revendications précédentes, ledit procédé étant **caractérisé en ce que** la modélisation de la composante fondamentale du courant circulant sur le réseau est linéaire et est déterminée sur la base du modèle suivant:

$$\begin{bmatrix} \dot{X}_d \\ \dot{X}_q \end{bmatrix} = \begin{bmatrix} A & 2\pi f h I_n \\ -2\pi f h I_n & A \end{bmatrix} \begin{bmatrix} X_d \\ X_q \end{bmatrix} + \begin{pmatrix} B_u & \phi \\ \phi & B_u \end{pmatrix} \begin{bmatrix} U_{inv_d} \\ U_{inv_q} \end{bmatrix} + \begin{pmatrix} B_w & \phi \\ \phi & B_w \end{pmatrix} \begin{bmatrix} w_d \\ w_q \end{bmatrix}$$

$$\begin{bmatrix} s_d \\ s_q \end{bmatrix} = \begin{pmatrix} C & \phi \\ \phi & C \end{pmatrix} \begin{bmatrix} X_d \\ X_q \end{bmatrix} + \begin{pmatrix} D_u & \phi \\ \phi & D_u \end{pmatrix} \begin{bmatrix} U_{inv_d} \\ U_{inv_q} \end{bmatrix} + \begin{pmatrix} D_w & \phi \\ \phi & D_w \end{pmatrix} \begin{bmatrix} w_d \\ w_q \end{bmatrix}$$

où

- h représente le rang de l'harmonique correspondant à la composante dont la fréquence est choisie, pour h=1 il s'agit de la composante fondamentale,
- Xd est un vecteur qui contient les composantes [$i_{net}$ $i_{inv}$ $v_{Caf}$] selon l'axe d, et lorsque cette grandeur possède un point au-dessus, il s'agit de sa dérivée par rapport au temps,
- Xq est un vecteur qui contient les composantes [$i_{net}$ $i_{inv}$ $v_{Caf}$] selon l'axe q, et lorsque cette grandeur possède un point au-dessus, il s'agit de sa dérivée par rapport au temps,

- A est la matrice $\begin{bmatrix} -\dfrac{r_{net}}{L_{net}} & 0 & -\dfrac{1}{L_{net}} \\ 0 & 0 & -\dfrac{1}{L_{af}} \\ \dfrac{1}{C_{af}} & \dfrac{1}{C_{af}} & 0 \end{bmatrix}$ dont les paramètres sont ceux du réseau et du filtre de sortie de l'onduleur,

- f est la fréquence choisie

- In est une matrice identité de même dimension que A c'est-à-dire que $In = \begin{bmatrix} 1 & 0 & 0 \\ 0 & 1 & 0 \\ 0 & 0 & 1 \end{bmatrix}$

- Φ est une matrice de dimension convenable qui ne possède que des termes nuls,

- Bu est une matrice définie par : $B_u = \begin{bmatrix} 0 \\ \dfrac{1}{L_{af}} \\ 0 \end{bmatrix}$

- Bw est une matrice définie par : $B_w = \begin{bmatrix} 0 & \dfrac{1}{L_{net}} \\ 0 & 0 \\ \dfrac{1}{C_{af}} & 0 \end{bmatrix}$

- $Uinv_d$ est la tension de commande de l'onduleur selon un axe d,
- $Uinv_q$ est la tension de commande de l'onduleur selon l'axe q,
- $W_d$ est un vecteur qui contient les composantes [$i_{load}$ $V_{net}$] selon l'axe d,
- Wq est un vecteur qui contient les composantes [$i_{load}$ $V_{net}$] selon l'axe q,
- $S_d = X_d$ et $S_q = X_q$

- C est une matrice qui s'écrit : $C = \begin{bmatrix} 1 & 0 & 0 \\ 0 & 1 & 0 \\ 0 & 0 & 1 \end{bmatrix}$

- $D_u = \begin{bmatrix} 0 \\ 0 \\ 0 \end{bmatrix}$

- $i_{load}$ est l'intensité absorbée par la charge,
- $V_{net}$ est la tension du réseau,
- $L_{af}$ est l'inductance d'un filtre de conversion en sortie de l'onduleur,
- $C_{af}$ est la capacité d'un filtre de conversion en sortie de l'onduleur,
- $L_{net}$ est l'inductance du réseau,
- $r_{net}$ est la résistance du réseau,

et $D_w = \begin{bmatrix} 0 & 0 \\ 0 & 0 \\ 0 & 0 \end{bmatrix}$

**5.** Système de filtrage actif d'un courant triphasé d'un réseau électrique, susceptible de mettre en oeuvre le procédé selon l'une quelconque des revendications 1 à 4, ledit courant comportant une composante fondamentale à une fréquence choisie et au moins une composante polluante à une fréquence différente de ladite fréquence choisie, ledit système comportant :

- des moyens pour mesurer le courant circulant sur le réseau en un point du réseau,
- un onduleur apte à générer un courant proportionnel à ladite composante polluante et en opposition de phase, et à réinjecter ledit courant proportionnel sur ledit réseau électrique, de manière à annuler ladite composante polluante,
ledit système selon l'invention étant **caractérisé en ce qu'**il comporte un dispositif d'extraction de ladite composante fondamentale, apte à :

o modéliser le courant circulant sur le réseau à partir d'une modélisation qui lui est propre,

 o calculer ladite composante fondamentale à partir de ladite modélisation,
 o soustraire la composante fondamentale audit courant mesuré, de sorte à obtenir le courant total polluant,
 o générer une commande correspondante au courant total polluant,
 o et transmettre ladite commande audit onduleur, de sorte que ledit onduleur génère ledit courant proportionnel au courant total polluant,

dans lequel
la modélisation est linéaire et est déterminée sur la base du modèle suivant :

$$\begin{bmatrix} \dot{X}_d \\ \dot{X}_q \end{bmatrix} = \begin{bmatrix} A & 2\pi f h I_n \\ -2\pi f h I_n & A \end{bmatrix}\begin{bmatrix} X_d \\ X_q \end{bmatrix} + \begin{pmatrix} B_u & \phi \\ \phi & B_u \end{pmatrix}\begin{bmatrix} U_{inv_d} \\ U_{inv_q} \end{bmatrix} + \begin{pmatrix} B_w & \phi \\ \phi & B_w \end{pmatrix}\begin{bmatrix} w_d \\ w_q \end{bmatrix}$$

$$\begin{bmatrix} s_d \\ s_q \end{bmatrix} = \begin{pmatrix} C & \phi \\ \phi & C \end{pmatrix}\begin{bmatrix} X_d \\ X_q \end{bmatrix} + \begin{pmatrix} D_u & \phi \\ \phi & D_u \end{pmatrix}\begin{bmatrix} U_{inv_d} \\ U_{inv_q} \end{bmatrix} + \begin{pmatrix} D_w & \phi \\ \phi & D_w \end{pmatrix}\begin{bmatrix} w_d \\ w_q \end{bmatrix}$$

*où*
- h représente le rang de l'harmonique correspondant à la composante dont la fréquence est choisie, pour h=1 il s'agit de la composante fondamentale,
- Xd est un vecteur qui contient les composantes [$i_{net}$ $i_{inv}$ $v_{Caf}$] selon l'axe d, et lorsque cette grandeur possède un point au-dessus, il s'agit de sa dérivée par rapport au temps,
- Xq est un vecteur qui contient les composantes [$i_{net}$ $i_{inv}$ $v_{Caf}$] selon l'axe q, et lorsque cette grandeur possède un point au-dessus, il s'agit de sa dérivée par rapport au temps,

- A est la matrice $\begin{bmatrix} -\dfrac{r_{net}}{L_{net}} & 0 & -\dfrac{1}{L_{net}} \\ 0 & 0 & -\dfrac{1}{L_{af}} \\ \dfrac{1}{C_{af}} & \dfrac{1}{C_{af}} & 0 \end{bmatrix}$ dont les paramètres sont ceux du réseau et du filtre de sortie de l'onduleur,

- f est la fréquence choisie

- In est une matrice identité de même dimension que A c'est-à-dire que $In = \begin{bmatrix} 1 & 0 & 0 \\ 0 & 1 & 0 \\ 0 & 0 & 1 \end{bmatrix}$

- Φ est une matrice de dimension convenable qui ne possède que des termes nuls,

- Bu est une matrice définie par : $B_u = \begin{bmatrix} 0 \\ \dfrac{1}{L_{af}} \\ 0 \end{bmatrix}$

- Bw est une matrice définie par : $B_w = \begin{bmatrix} 0 & \dfrac{1}{L_{net}} \\ 0 & 0 \\ \dfrac{1}{C_{af}} & 0 \end{bmatrix}$

- $Uinv_d$ est la tension de commande de l'onduleur selon un axe d,
- $Uinv_q$ est la tension de commande de l'onduleur selon l'axe q,
- $W_d$ est un vecteur qui contient les composantes [$i_{load}$ $V_{net}$] selon l'axe d,

- Wq est un vecteur qui contient les composantes [$i_{load}$ $V_{net}$] selon l'axe q,
- $S_d = X_d$ et $S_q = X_q$

- C est une matrice qui s'écrit : $C = \begin{bmatrix} 1 & 0 & 0 \\ 0 & 1 & 0 \\ 0 & 0 & 1 \end{bmatrix}$

- $\mathbf{D_u} = \begin{bmatrix} 0 \\ 0 \\ 0 \end{bmatrix}$

- $i_{load}$ est l'intensité de la charge,
- $V_{net}$ est la tension du réseau,
- $L_{af}$ est l'inductance d'un filtre de conversion en sortie de l'onduleur,
- $C_{af}$ est la capacité d'un filtre de conversion en sortie de l'onduleur,
- $L_{net}$ est l'inductance du réseau,
- $r_{net}$ est la résistance du réseau,

et $\mathbf{D_w} = \begin{bmatrix} 0 & 0 \\ 0 & 0 \\ 0 & 0 \end{bmatrix}$

**Claims**

1. Process for the active filtration of a three-phase current in an electric network, the said current comprising a fundamental component at a selected frequency and at least one pollutant component at a different frequency from the selected frequency, the said process comprising:

   - a step of measuring the current flowing in the network at one point of the network,
   - a step of generating a current which is proportional to the said pollutant component and out of phase, by an inverter,
   - and a step of re-injecting the said proportional current into the said electric network, in such a way that the said pollutant component is stopped,
   in which the step of generating the said proportional current comprises the following sub-steps:

     o transmitting the measurement of the current flowing in the network to a device for extracting the said fundamental component,
     o modelling the fundamental component of the current flowing in the network based on a modelling which is specific to the said extraction device,
     o calculating the said fundamental component from the said modelling,
     o subtracting the fundamental component from the measured current, in such a way that the total pollutant current is obtained,
     o generating a command corresponding to the total pollutant current,
     o and transmitting the said command to the said inverter, in such a way that the said inverter generates the said current proportional to the total pollutant current,

   the said process being **characterised in that** the modelling is linear and is determined on the basis of the following model:

$$\begin{bmatrix} \dot{X}_d \\ \dot{X}_q \end{bmatrix} = \begin{bmatrix} A & 2\pi f h I_n \\ -2\pi f h I_n & A \end{bmatrix} \begin{bmatrix} X_d \\ X_q \end{bmatrix} + \begin{pmatrix} B_u & \phi \\ \phi & B_u \end{pmatrix} \begin{bmatrix} U_{inv_d} \\ U_{inv_q} \end{bmatrix} + \begin{pmatrix} B_w & \phi \\ \phi & B_w \end{pmatrix} \begin{bmatrix} w_d \\ w_q \end{bmatrix}$$

$$\begin{bmatrix} s_d \\ s_q \end{bmatrix} = \begin{pmatrix} C & \phi \\ \phi & C \end{pmatrix} \begin{bmatrix} X_d \\ X_q \end{bmatrix} + \begin{pmatrix} D_u & \phi \\ \phi & D_u \end{pmatrix} \begin{bmatrix} U_{inv_d} \\ U_{inv_q} \end{bmatrix} + \begin{pmatrix} D_w & \phi \\ \phi & D_w \end{pmatrix} \begin{bmatrix} w_d \\ w_q \end{bmatrix}$$

where
- h represents the harmonic rank corresponding to the component whose frequency is selected, for which h=1 refers to the fundamental component,
- Xd is a vector which contains the components [$i_{net}$ $i_{inv}$ $V_{Caf}$] along the d axis, and when the capital letter has a dot above it, it refers to its time derivative,
- Xq is a vector which contains the components [$i_{net}$ $i_{inv}$ $V_{Caf}$] along the q axis, and when the capital letter has a dot above it, it refers to its time derivative,

- A is the matrix $\begin{bmatrix} -\dfrac{r_{net}}{L_{net}} & 0 & -\dfrac{1}{L_{net}} \\ 0 & 0 & -\dfrac{1}{L_{af}} \\ \dfrac{1}{C_{af}} & \dfrac{1}{C_{af}} & 0 \end{bmatrix}$ whose parameters are those of the network and of the output filter of the inverter,

- f is the selected frequency

- In is an identity matrix of the same dimension as A, that is to say $In = \begin{bmatrix} 1 & 0 & 0 \\ 0 & 1 & 0 \\ 0 & 0 & 1 \end{bmatrix}$

- $\Phi$ is a matrix of suitable dimension which only has zero terms

- Bu is a matrix defined by: $B_u = \begin{bmatrix} 0 \\ \dfrac{1}{L_{af}} \\ 0 \end{bmatrix}$

- Bw is a matrix defined by: $B_w = \begin{bmatrix} 0 & \dfrac{1}{L_{net}} \\ 0 & 0 \\ \dfrac{1}{C_{af}} & 0 \end{bmatrix}$

- $Uinv_d$ is the driving voltage of the inverter along a d axis,
- $Uinv_d$ is the driving voltage of the inverter along the q axis,
- $W_d$ is a vector which contains the components [$i_{load}$ $V_{net}$] along the d axis,

- Wq is a vector which contains the components [$i_{load}$ $V_{net}$] along the q axis,
- $S_d = X_d$ and $S_q = X_q$

- C is a matrix which is written: $C = \begin{bmatrix} 1 & 0 & 0 \\ 0 & 1 & 0 \\ 0 & 0 & 1 \end{bmatrix}$

- $D_u = \begin{bmatrix} 0 \\ 0 \\ 0 \end{bmatrix}$

- $i_{load}$ is the intensity of the charge,
- $V_{net}$ is the voltage of the network,
- $L_{af}$ is the inductance of an output conversion filter of the inverter,
- $C_{af}$ is the capacity of an output conversion filter of the inverter,
- $L_{net}$ is the inductance of the network,
- $r_{net}$ is the resistance of the network,

and

$$D_w = \begin{bmatrix} 0 & 0 \\ 0 & 0 \\ 0 & 0 \end{bmatrix}$$

2. Process according to claim 1, **characterised in that** the calculation for the said fundamental component consists of replacing the frequency of the current of the said parameter with the said selected frequency of the said fundamental component.

3. Process according to any one of the previous claims, **characterised in that** the said steps are carried out in a continuous loop, in such a way that the pollutant component is stopped regularly in the network.

4. Application of a process for the active filtration of a three-phrase current in an electric network according to any one of the previous claims,
the said process being **characterised in that** the modelling of the fundamental component of the current flowing through the network, is linear and is determined on the basis of the following model:

$$\begin{bmatrix} \dot{X}_d \\ \dot{X}_q \end{bmatrix} = \begin{bmatrix} A & 2\pi fhI_n \\ -2\pi fhI_n & A \end{bmatrix} \begin{bmatrix} X_d \\ X_q \end{bmatrix} + \begin{pmatrix} B_u & \phi \\ \phi & B_u \end{pmatrix} \begin{bmatrix} U_{inv_d} \\ U_{inv_q} \end{bmatrix} + \begin{pmatrix} B_w & \phi \\ \phi & B_w \end{pmatrix} \begin{bmatrix} w_d \\ w_q \end{bmatrix}$$

$$\begin{bmatrix} S_d \\ S_q \end{bmatrix} = \begin{pmatrix} C & \phi \\ \phi & C \end{pmatrix} \begin{bmatrix} X_d \\ X_q \end{bmatrix} + \begin{pmatrix} D_u & \phi \\ \phi & D_u \end{pmatrix} \begin{bmatrix} U_{inv_d} \\ U_{inv_q} \end{bmatrix} + \begin{pmatrix} D_w & \phi \\ \phi & D_w \end{pmatrix} \begin{bmatrix} w_d \\ w_q \end{bmatrix}$$

16

where

- h represents the harmonic rank corresponding to the component whose frequency is selected, for which h=1 refers to the fundamental component,
- Xd is a vector which contains the components [$i_{net}$ $i_{inv}$ $V_{Caf}$] along the d axis, and when the capital letter has a dot above it, it refers to its time derivative,
- Xq is a vector which contains the components [$i_{net}$ $i_{inv}$ $v_{Caf}$] along the taxis, and when the capital letter has a dot above it, it refers to its time derivative,

- A is the matrix 
$$\begin{bmatrix} -\dfrac{r_{net}}{L_{net}} & 0 & -\dfrac{1}{L_{net}} \\ 0 & 0 & -\dfrac{1}{L_{af}} \\ \dfrac{1}{C_{af}} & \dfrac{1}{C_{af}} & 0 \end{bmatrix}$$ 
whose parameter

- A is the matrix whose parameters are those of the network and of the output filter of the inverter,
- f is the selected frequency

- In is an identity matrix of the same dimension as A, that is to say $$In = \begin{bmatrix} 1 & 0 & 0 \\ 0 & 1 & 0 \\ 0 & 0 & 1 \end{bmatrix}$$

- Φ is a matrix of suitable dimension which only has zero terms,

- Bu is a matrix defined by: $$B_u = \begin{bmatrix} 0 \\ \dfrac{1}{L_{af}} \\ 0 \end{bmatrix}$$

- Bw is a matrix defined by: $$B_w = \begin{bmatrix} 0 & \dfrac{1}{L_{net}} \\ 0 & 0 \\ \dfrac{1}{C_{af}} & 0 \end{bmatrix}$$

- Uinv$_d$ is the driving voltage of the inverter along a d axis,
- Uinv$_d$ is the driving voltage of the inverter along the q axis,
- W$_d$ is a vector which contains the components [$i_{load}$ $V_{net}$] along the d axis,
- Wq is a vector which contains the components [$i_{load}$ $V_{net}$] along the q axis,
- S$_d$ = X$_d$ and S$_q$ = X$_q$

- C is a matrix which is written: $$C = \begin{bmatrix} 1 & 0 & 0 \\ 0 & 1 & 0 \\ 0 & 0 & 1 \end{bmatrix}$$

$$D_u = \begin{bmatrix} 0 \end{bmatrix}$$

- $i_{load}$ is the intensity of the charge,
- $V_{net}$ is the voltage of the network,
- $L_{af}$ is the inductance of an output conversion filter of the inverter,
- $C_{af}$ is the capacity of an output conversion filter of the inverter,
- $L_{net}$ is the inductance of the network,
- $r_{net}$ is the resistance of the network,

and

$$D_w = \begin{bmatrix} 0 & 0 \\ 0 & 0 \\ 0 & 0 \end{bmatrix}$$

5. System of active filtration of a three-phase current for an electric network, capable of carrying out the process according to any one of claims 1 to 4, the said current comprising a fundamental component at a selected frequency and at least one pollutant component at a different frequency from the said selected frequency, the said system comprising:

- means for measuring the current flowing in the network at one point of the network,
- an inverter capable of generating a current which is proportional to the said pollutant component and out of phase, and of re-injecting the said proportional current into the said electrical network, in such a way that the said pollutant component is stopped,
the said system according to the invention being **characterised in that** it comprises a device for extracting the said fundamental component, capable of:

o modelling the current flowing in the network based on a suitable modelling,
o calculating the said fundamental component from the said modelling,
o subtracting the said fundamental component from the said measured current, in such a way that the total pollutant current is obtained,
o generating a command corresponding to the total pollutant current,
o and transmitting the said command to the said inverter, in such a way that the said inverter generates the said current which is proportional to the total pollutant current,

in which the modelling is linear and is determined on the basis of the following model:

$$\begin{bmatrix} \dot{X}_d \\ \dot{X}_q \end{bmatrix} = \begin{bmatrix} A & 2\pi f h I_n \\ -2\pi f h I_n & A \end{bmatrix} \begin{bmatrix} X_d \\ X_q \end{bmatrix} + \begin{pmatrix} B_u & \phi \\ \phi & B_u \end{pmatrix} \begin{bmatrix} U_{inv_d} \\ U_{inv_q} \end{bmatrix} + \begin{pmatrix} B_w & \phi \\ \phi & B_w \end{pmatrix} \begin{bmatrix} w_d \\ w_q \end{bmatrix}$$

$$\begin{bmatrix} s_d \\ s_q \end{bmatrix} = \begin{pmatrix} C & \phi \\ \phi & C \end{pmatrix} \begin{bmatrix} X_d \\ X_q \end{bmatrix} + \begin{pmatrix} D_u & \phi \\ \phi & D_u \end{pmatrix} \begin{bmatrix} U_{inv_d} \\ U_{inv_q} \end{bmatrix} + \begin{pmatrix} D_w & \phi \\ \phi & D_w \end{pmatrix} \begin{bmatrix} w_d \\ w_q \end{bmatrix}$$

where
- h represents the harmonic rank corresponding to the component whose frequency is selected, for which h=1 refers to the fundamental component,
- Xd is a vector which contains the components [$i_{net}$ $i_{inv}$ $V_{Caf}$] along the d axis, and when the capital letter has a dot above it, it refers to its time derivative,
- Xq is a vector which contains the components [$i_{net}$ $i_{inv}$ $V_{Caf}$] along the q axis, and when the capital letter has a dot above it, it refers to its time derivative,

- A is the matrix $\begin{bmatrix} -\dfrac{r_{net}}{L_{net}} & 0 & -\dfrac{1}{L_{net}} \\ 0 & 0 & -\dfrac{1}{L_{af}} \\ \dfrac{1}{C_{af}} & \dfrac{1}{C_{af}} & 0 \end{bmatrix}$ whose parameter

- A is the matrix whose parameters are those of the network and of the output filter of the inverter,
- f is the selected frequency

- In is an identity matrix of the same dimension as A, that is to say $In = \begin{bmatrix} 1 & 0 & 0 \\ 0 & 1 & 0 \\ 0 & 0 & 1 \end{bmatrix}$

- Φ is a matrix of suitable dimension which only has zero terms,

- Bu is a matrix defined by: $B_u = \begin{bmatrix} 0 \\ \dfrac{1}{L_{af}} \\ 0 \end{bmatrix}$

- Bw is a matrix defined by: $B_w = \begin{bmatrix} 0 & \dfrac{1}{L_{net}} \\ 0 & 0 \\ \dfrac{1}{C_{af}} & 0 \end{bmatrix}$

- Uinv$_d$ is the driving voltage of the inverter along a d axis,
- Uinv$_d$ is the driving voltage of the inverter along the q axis,
- W$_d$ is a vector which contains the components [$i_{load}$ $V_{net}$] along the d axis,
- Wq is a vector which contains the components [$i_{load}$ $V_{net}$] along the q axis,
- $S_d = X_d$ and $S_q = X_q$

- C is a matrix which is written: $C = \begin{bmatrix} 1 & 0 & 0 \\ 0 & 1 & 0 \\ 0 & 0 & 1 \end{bmatrix}$

$$D_u = \begin{bmatrix} \overline{\phantom{0}} \\ 0 \\ \underline{\phantom{0}} \end{bmatrix}$$

- $i_{load}$ is the intensity of the charge,
- $V_{net}$ is the voltage of the network,
- $L_{af}$ is the inductance of an output conversion filter of the inverter,
- $C_{af}$ is the capacity of an output conversion filter of the inverter,
- $L_{net}$ is the inductance of the network,
- $r_{net}$ is the resistance of the network,

and

$$D_w = \begin{bmatrix} 0 & 0 \\ 0 & 0 \\ 0 & 0 \end{bmatrix}$$

## Patentansprüche

1. Verfahren zur aktiven Filterung eines 3-Phasen-Stroms eines elektrischen Netzes, wobei der Strom eine fundamentale Komponente mit einer gewählten Frequenz und zumindest eine verunreinigende Komponente mit einer von der gewählten Frequenz verschiedenen Frequenz aufweist, wobei das Verfahren umfasst:

- einen Schritt zum Messen des Stroms, der im Netz an einem Punkt des Netzes fließt,
- einen Schritt zur Erzeugung eines Stromes, der zur verunreinigenden Komponente proportional ist und durch einen Wechselrichter eine entgegengesetzte Phase aufweist,
- und einen Schritt zur Wiederinjizierung des proportionalen Stroms im elektrischen Netz, in der Weise, um die verunreinigende Komponente zu annullieren, bei dem der Schritt zur Erzeugung des proportionalen Stroms folgende Unterschritte aufweist:

- Übertragen der Messung des im Netz fließenden Stroms zu einer Extraktionsvorrichtung der fundamentalen Komponente,
- Modellieren der fundamentalen Komponente des im Netz fließenden Stroms ausgehend von einer geeigneten Modellierung für die Extraktionsvorrichtung,
- Berechnen der fundamentalen Komponente ausgehend von der Modellierung,
- Subtrahieren der fundamentalen Komponente vom gemessenen Strom, um den gesamten verunreinigenden Strom zu erhalten,
- Erzeugen eines dem gesamten verunreinigenden Strom entsprechenden Befehls,
- und Übertragen des Befehls zum Wechselrichter, so dass der Wechselrichter den zum gesamten verunreinigenden Strom proportionalen Strom erzeugt,

- wobei das Verfahren **dadurch gekennzeichnet ist, dass** die Modellierung linear ist und auf der Grundlage des folgenden Modells bestimmt ist:

$$\begin{bmatrix} \dot{X}_d \\ \dot{X}_q \end{bmatrix} = \begin{bmatrix} A & 2\pi f h I_n \\ -2\pi f h I_n & A \end{bmatrix} \begin{bmatrix} X_d \\ X_q \end{bmatrix} + \begin{pmatrix} B_u & \Phi \\ \Phi & B_u \end{pmatrix} \begin{bmatrix} U_{inv_d} \\ U_{inv_q} \end{bmatrix} + \begin{pmatrix} B_w & \Phi \\ \Phi & B_w \end{pmatrix} \begin{bmatrix} w_d \\ w_q \end{bmatrix}$$

$$\begin{bmatrix} s_d \\ s_q \end{bmatrix} = \begin{pmatrix} C & \Phi \\ \Phi & C \end{pmatrix} \begin{bmatrix} X_d \\ X_q \end{bmatrix} + \begin{pmatrix} D_u & \Phi \\ \Phi & D_u \end{pmatrix} \begin{bmatrix} U_{inv_d} \\ U_{inv_q} \end{bmatrix} + \begin{pmatrix} D_w & \Phi \\ \Phi & D_w \end{pmatrix} \begin{bmatrix} w_d \\ w_q \end{bmatrix}$$

, wobei

- h den Rang der Harmonischen darstellt, der der Komponente entspricht, deren Frequenz gewählt ist, wobei es sich bei h=1 um die fundamentale Komponente handelt,
- Xd ein Vektor ist, der die Komponenten [$j_{net}$ $i_{inf}$ $v_{Caf}$] gemäß der Achse d aufweist, und es sich um seine Ableitung im Verhältnis zur Zeit handelt, wenn diese Größe oben einen Punkt aufweist,
- Xq ein Vektor ist, der die Komponenten [$j_{net}$ $i_{inf}$ $v_{Caf}$] gemäß der Achse q aufweist, und es sich um seine Ableitung im Verhältnis zur Zeit handelt, wenn diese Größe oben einen Punkt aufweist,

- A die Matrix $\begin{matrix} -\dfrac{r_{net}}{L_{net}} & 0 & -\dfrac{1}{L_{net}} \\ 0 & 0 & -\dfrac{1}{L_{af}} \\ \dfrac{1}{C_{af}} & \dfrac{1}{C_{af}} & 0 \end{matrix}$ ist, deren Parameter diejenigen des Netzes

und des Ausgangsfilters des Wechselrichters sind,
- f die gewählte Frequenz ist,
- In eine Einheitsmatrix derselben Dimension wie A ist, das heißt, dass

$$In = \begin{matrix} 1 & 0 & 0 \\ 0 & 1 & 0 \\ 0 & 0 & 1 \end{matrix}$$

- Φ eine Matrix geeigneter Dimension ist, die ausschließlich Nullen als Ausdrücke besitzt,

- Bu eine Matrix ist, die definiert ist durch: $B_u = \begin{bmatrix} 0 \\ \dfrac{1}{L_{af}} \\ 0 \end{bmatrix}$

- Bw eine Matrix ist, die definiert ist durch: $B_w = \begin{bmatrix} 0 & \dfrac{1}{L_{net}} \\ 0 & 0 \\ \dfrac{1}{C_{af}} & 0 \end{bmatrix}$

- Uinv$_d$ die Steuerspannung des Wechselrichters gemäß einer Achse d ist,
- Uinv$_q$ die Steuerspannung des Wechselrichters gemäß der Achse q ist,
- Wd ein Vektor ist, der die Komponenten [$i_{load}$ $V_{net}$] gemäß der Achse d aufweist,
- Wq ein Vektor ist, der die Komponenten [$i_{load}$ $V_{net}$] gemäß der Achse q aufweist,
- $s_d=X_d$ und $s_q=X_q$

- C eine Matrix ist, wie folgt: $C = \begin{bmatrix} 0 & 1 & 0 \\ 0 & 0 & 1 \end{bmatrix}$

-

$$D_u = \begin{bmatrix} 0 \\ 0 \\ 0 \end{bmatrix}$$

- $i_{load}$ die Intensität der Ladung ist,
- $V_{net}$ die Spannung des Netzes ist,
- $L_{af}$ die Induktivität eines Umwandlungsfilters am Ausgang des Wechselrichters ist,
- $C_{af}$ die Kapazität eines Umwandlungsfilters am Ausgang des Wechselrichters ist,
- $L_{net}$ die Induktivität des Netzes ist,
- $r_{net}$ der Widerstand des Netzes ist, und

$$D_w = \begin{bmatrix} 0 & 0 \\ 0 & 0 \\ 0 & 0 \end{bmatrix}.$$

2. Verfahren nach Anspruch 1, **dadurch gekennzeichnet, dass** die Berechnung der fundamentalen Komponente darin besteht, die Frequenz des Stroms des Parameters durch die gewählte Frequenz der fundamentalen Komponente zu ersetzen.

3. Verfahren nach irgend einem der vorhergehenden Ansprüche, **dadurch gekennzeichnet, dass** die Schritte als Schleife realisiert sind, derart, um regelmäßig die verunreinigende Komponente im Netz zu annullieren.

4. Anwendung eines Verfahrens zur aktiven Filterung eines 3-Phasen-Stroms eines elektrischen Netzes gemäß einem der vorhergehenden Ansprüche, wobei das Verfahren **dadurch gekennzeichnet ist, dass** die Modellierung der fundamentalen Komponente des im Netz fließenden Stroms linear ist und auf der Grundlage des folgenden Modells bestimmt ist:

$$\begin{bmatrix} \dot{X}_d \\ \dot{X}_q \end{bmatrix} = \begin{bmatrix} A & 2\pi fhI_n \\ -2\pi fhI_n & A \end{bmatrix} \begin{bmatrix} X_d \\ X_q \end{bmatrix} + \begin{pmatrix} B_u & \Phi \\ \Phi & B_u \end{pmatrix} \begin{bmatrix} U_{inv_d} \\ U_{inv_q} \end{bmatrix} + \begin{pmatrix} B_w & \Phi \\ \Phi & B_w \end{pmatrix} \begin{bmatrix} w_d \\ w_q \end{bmatrix}$$

$$\begin{bmatrix} s_d \\ s_q \end{bmatrix} = \begin{pmatrix} C & \Phi \\ \Phi & C \end{pmatrix} \begin{bmatrix} X_d \\ X_q \end{bmatrix} + \begin{pmatrix} D_u & \Phi \\ \Phi & D_u \end{pmatrix} \begin{bmatrix} U_{inv_d} \\ U_{inv_q} \end{bmatrix} + \begin{pmatrix} D_w & \Phi \\ \Phi & D_w \end{pmatrix} \begin{bmatrix} w_d \\ w_q \end{bmatrix}$$

, wobei

- h den Rang der Harmonischen darstellt, der der Komponente entspricht, deren Frequenz gewählt ist, wobei es sich bei h=1 um die fundamentale Komponente handelt,
- Xd ein Vektor ist, der die Komponenten [$j_{net}$ $i_{inf}$ $v_{Caf}$] gemäß der Achse d aufweist, und es sich um seine Ableitung im Verhältnis zur Zeit handelt, wenn diese Größe oben einen Punkt aufweist,

- Xq ein Vektor ist, der die Komponenten [$j_{net}$ $i_{inf}$ $v_{Caf}$] gemäß der Achse q aufweist, und es sich um seine Ableitung im Verhältnis zur Zeit handelt, wenn diese Größe oben einen Punkt aufweist,

- A die Matrix $\begin{matrix} -\dfrac{r_{net}}{L_{net}} & 0 & -\dfrac{1}{L_{net}} \\ 0 & 0 & -\dfrac{1}{L_{af}} \\ \dfrac{1}{C_{af}} & \dfrac{1}{C_{af}} & 0 \end{matrix}$ ist, deren Parameter diejenigen des Netzes

und des Ausgangsfilters des Wechselrichters sind,
- f die gewählte Frequenz ist,
- In eine Einheitsmatrix derselben Dimension wie A ist, das heißt, dass

$$In = \begin{matrix} 1 & 0 & 0 \\ 0 & 1 & 0 \\ 0 & 0 & 1 \end{matrix}$$

- Φ eine Matrix geeigneter Dimension ist, die ausschließlich Nullen als Ausdrücke besitzt,

- Bu eine Matrix ist, die definiert ist durch: $B_u = \begin{bmatrix} 0 \\ \dfrac{1}{L_{af}} \\ 0 \end{bmatrix}$

- Bw eine Matrix ist, die definiert ist durch: $B_w = \begin{bmatrix} 0 & \dfrac{1}{L_{net}} \\ 0 & 0 \\ \dfrac{1}{C_{af}} & 0 \end{bmatrix}$

- $Uinv_d$ die Steuerspannung des Wechselrichters gemäß einer Achse d ist,
- $Uinv_q$ die Steuerspannung des Wechselrichters gemäß der Achse q ist,
- Wd ein Vektor ist, der die Komponenten [$i_{load}$ $V_{net}$] gemäß der Achse d aufweist,
- Wq ein Vektor ist, der die Komponenten [$i_{load}$ $V_{net}$] gemäß der Achse q aufweist,
- $s_d = X_d$ und $s_q = X_q$

- C eine Matrix ist, wie folgt: $C = \begin{bmatrix} 1 & 0 & 0 \\ 0 & 1 & 0 \\ 0 & 0 & 1 \end{bmatrix}$

- $D_u = \begin{matrix} 0 \\ 0 \\ 0 \end{matrix}$

- $i_{load}$ die durch die Ladung absorbierte Intensität ist,
- $V_{net}$ die Spannung des Netzes ist,
- $L_{af}$ die Induktivität eines Umwandlungsfilters am Ausgang des Wechselrichters ist,
- $C_{af}$ die Kapazität eines Umwandlungsfilters am Ausgang des Wechselrichters ist,
- $L_{net}$ die Induktivität des Netzes ist,
- $r_{net}$ der Widerstand des Netzes ist, und

$$D_w = \begin{bmatrix} 0 & 0 \\ 0 & 0 \\ 0 & 0 \end{bmatrix}.$$

**5.** System zur aktiven Filterung eines 3-Phasen-Stroms eines elektrischen Netzes, das eingerichtet ist, das Verfahren gemäß irgendeinem der Ansprüche 1 bis 4 auszuführen, wobei der Strom eine fundamentale Komponente bei einer gewählten Frequenz und zumindest eine verunreinigende Komponente bei einer anderen Frequenz als der gewählten Frequenz aufweist, wobei das System aufweist:

- Mittel zum Messen des im Netz fließenden Stroms an einem Punkt des Netzes,
- einen Wechselrichter, der eingerichtet ist, einen Strom zu erzeugen, der proportional zur verunreinigenden Komponente und mit entgegengesetzter Phase ist, und den proportionalen Strom in das elektrische Netz zu reinjizieren, derart, um die verunreinigende Komponente zu annullieren,
wobei das erfindungsgemäße System **dadurch gekennzeichnet ist, dass** es eine Vorrichtung zur Extraktion der fundamentalen Komponente aufweist, die eingerichtet, zum:

- Modellieren des im Netz fließenden Stroms ausgehend von einer für diesen geeigneten Modellierung,
- Berechnen der fundamentalen Komponente ausgehend von der Modellierung,
- Subtrahieren der fundamentalen Komponente vom gemessenen Strom, um den gesamten verunreinigenden Strom zu erhalten,
- Erzeugen eines dem gesamten verunreinigenden Strom entsprechenden Befehls,
- und Übertragen des Befehls zum Wechselrichter, so dass der Wechselrichter den zum gesamten verunreinigenden Strom proportionalen Strom erzeugt,

in dem die Modellierung linear und auf der Grundlage des folgenden Modells bestimmt ist:

$$\begin{bmatrix} \dot{X}_d \\ \dot{X}_q \end{bmatrix} = \begin{bmatrix} A & 2\pi fh I_n \\ -2\pi fh I_n & A \end{bmatrix}\begin{bmatrix} X_d \\ X_q \end{bmatrix} + \begin{pmatrix} B_u & \Phi \\ \Phi & B_u \end{pmatrix}\begin{bmatrix} U_{inv_d} \\ U_{inv_q} \end{bmatrix} + \begin{pmatrix} B_w & \Phi \\ \Phi & B_w \end{pmatrix}\begin{bmatrix} w_d \\ w_q \end{bmatrix}$$

$$\begin{bmatrix} s_d \\ s_q \end{bmatrix} = \begin{pmatrix} C & \Phi \\ \Phi & C \end{pmatrix}\begin{bmatrix} X_d \\ X_q \end{bmatrix} + \begin{pmatrix} D_u & \Phi \\ \Phi & D_u \end{pmatrix}\begin{bmatrix} U_{inv_d} \\ U_{inv_q} \end{bmatrix} + \begin{pmatrix} D_w & \Phi \\ \Phi & D_w \end{pmatrix}\begin{bmatrix} w_d \\ w_q \end{bmatrix}$$

, wobei
- h den Rang der Harmonischen darstellt, der der Komponente entspricht, deren Frequenz gewählt ist, wobei es sich bei h=1 um die fundamentale Komponente handelt,
- Xd ein Vektor ist, der die Komponenten [$i_{net}$ $i_{inf}$ $v_{Caf}$] gemäß der Achse d aufweist, und es sich um seine Ableitung im Verhältnis zur Zeit handelt, wenn diese Größe oben einen Punkt aufweist,
- Xq ein Vektor ist, der die Komponenten [$i_{net}$ $i_{inf}$ $v_{Caf}$] gemäß der Achse q aufweist, und es sich um seine Ableitung im Verhältnis zur Zeit handelt, wenn diese Größe oben einen Punkt aufweist,

- A die Matrix $\begin{matrix} -\dfrac{r_{net}}{L_{net}} & 0 & -\dfrac{1}{L_{net}} \\ 0 & 0 & -\dfrac{1}{L_{af}} \\ \dfrac{1}{C_{af}} & \dfrac{1}{C_{af}} & 0 \end{matrix}$ ist, deren Parameter diejenigen des Netzes und des Ausgangsfilters des Wechselrichters sind,
- f die gewählte Frequenz ist,

- In eine Einheitsmatrix derselben Dimension wie A ist, das heißt, dass $In = \begin{matrix} 0 & 1 & 0 \\ 0 & 0 & 1 \end{matrix}$

- $\Phi$ eine Matrix geeigneter Dimension ist, die ausschließlich Nullen als Ausdrücke besitzt,

- Bu eine Matrix ist, die definiert ist durch: $B_u = \begin{bmatrix} 0 \\ \dfrac{1}{L_{af}} \\ 0 \end{bmatrix}$

- Bw eine Matrix ist, die definiert ist durch: $B_w = \begin{bmatrix} 0 & \dfrac{1}{L_{net}} \\ 0 & 0 \\ \dfrac{1}{C_{af}} & 0 \end{bmatrix}$

- Uinv$_d$ die Steuerspannung des Wechselrichters gemäß einer Achse d ist,
- Uinv$_q$ die Steuerspannung des Wechselrichters gemäß der Achse q ist,
- Wd ein Vektor ist, der die Komponenten [i$_{load}$ V$_{net}$] gemäß der Achse d aufweist,
- Wq ein Vektor ist, der die Komponenten [i$_{load}$ V$_{net}$] gemäß der Achse q aufweist,
- s$_d$=X$_d$ und s$_q$=X$_q$

- C eine Matrix ist, wie folgt: $C = \begin{bmatrix} 1 & 0 & 0 \\ 0 & 1 & 0 \\ 0 & 0 & 1 \end{bmatrix}$

- $D_u = \begin{bmatrix} 0 \\ 0 \\ 0 \end{bmatrix}$

- i$_{load}$ die Intensität der Ladung ist,
- V$_{net}$ die Spannung des Netzes ist,
- L$_{af}$ die Induktivität eines Umwandlungsfilters am Ausgang des Wechselrichters ist,
- C$_{af}$ die Kapazität eines Umwandlungsfilters am Ausgang des Wechselrichters ist,
- L$_{net}$ die Induktivität des Netzes ist,
- r$_{net}$ der Widerstand des Netzes ist, und

$$D_w = \begin{bmatrix} 0 & 0 \\ 0 & 0 \\ 0 & 0 \end{bmatrix}.$$

**FIG.1**

**FIG.2**

**FIG.3**

**FIG.4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5731965 A
- US 2002136036 A